# EUROPÄISCHE PATENTSCHRIFT

(11) **EP 0 967 086 B1**
(45) Veröffentlichungstag und Bekanntmachung des Hinweises auf die Patenterteilung: **21.03.2001**
(21) Anmeldenummer: 98810556.5
(22) Anmeldetag: 18.06.1998
(51) Int. Cl.: B41M 5/00, C08K 5/09, C08K 7/24, C09D 129/04

(54) **Aufzeichnungsmaterialien für den Tintenstrahldruck**
Recording materials for ink jet printing
Matériaux d'enregistrement pour l'impression par jet d'encre

(43) Veröffentlichungstag der Anmeldung: 29.12.1999
(73) Patentinhaber: ILFORD Imaging Switzerland GmbH, 1723 Marly 1 (CH)
(72) Erfinder: Steiger, Rolf, Dr., 1724 Praroman (CH)

(56) Entgegenhaltungen:
- EP-A- 0 614 771
- EP-A- 0 667 246
- WO-A-95/28285
- US-A- 5 683 793
- CHEMICAL ABSTRACTS, vol. 129, Columbus, Ohio, US; abstract no. 142641, TOMIOKA, HIROSHI ET AL: "Ink-jet printing receptor containing alumina hydrate, inorganic acid, and organic carboxylic acid" XP002082248 & JP 10 217603 A (CANON K. K., JAPAN)

## Beschreibung

### Technisches Gebiet

Die Erfindung bezieht sich auf Aufzeichnungsmaterialien für den Tintenstrahldruck sowie Beschichtungsmassen zur Herstellung von Tintenaufnahmeschichten für dieses Verfahren. Insbesondere bezieht sie sich auf Aufzeichnungsmaterialien, bei denen das darauf aufgezeichnete Bild in Aufsicht oder Durchsicht betrachtet wird und welche aus einem Träger und mindestens einer darauf aufliegenden Tintenaufnahmeschicht bestehen, wobei mindestens eine dieser Schichten ein poröses anorganisches Oxid sowie eine wasserlösliche aliphatische Monohydroxymonocarbonsäure mit mehr als 2 Kohlenstoffatomen enthält.

### Stand der Technik

Die heute erhältlichen Aufzeichnungsmaterialien für den Tintenstrahldruck erfüllen nicht alle an sie gestellten Anforderungen, insbesondere besteht die Notwendigkeit, das Tintenaufnahmevermögen, die Tintenaufnahmegeschwindigkeit, die Bildqualität sowie die Licht- und Wasserbeständigkeit weiter zu verbessem. Eine bevorzugte Ausführungsform der Erfindung bezieht sich auf verbesserte Aufzeichnungsmaterialien mit ausgezeichneter Bildqualität, hohem Tintenaufnahmevermögen und rascher Tintenaufnahme. Insbesondere werden Aufzeichnungsmaterialien für den Tintenstrahldruck gesucht, bei denen die darauf hergestellten Bilder eine gute Wischfestigkeit aufweisen und bei denen das Bild auch im Kontakt mit Wasser oder Licht nicht verändert oder zerstört wird.
Es gibt zwei unterschiedliche Verfahren beim Tintenstrahldruck, nämlich den kontinuierlichen und den nichtkontinuierlichen Tintenstrahldruck.
Beim kontinuierlichen Tintenstrahldruck wird unter Druck aus einer Düse ein Tintenstrahl erzeugt, der in einem gewissen Abstand von der Düse in einzelne Tröpfchen zerfällt. Die einzelnen Tröpfchen werden auf Grund vorgegebener digitaler Daten elektrisch aufgeladen und je nachdem, ob eine Bildstelle bedruckt oder nicht bedruckt werden soll, nach dem Durchgang durch ein statisches elektrisches Feld in einen Auffangbehälter abgelenkt oder an eine bestimmte Stelle auf dem Aufzeichnungsmaterial gebracht.
Beim nichtkontinuierlichen Tintenstrahldruck, dem sogenannten "Drop-on-demand"-Verfahren, wird ein Tintentröpfchen auf Grund vorgegebener digitaler Daten aus einer Düse ausgestossen und an die gewünschte Stelle auf dem Aufzeichnungsmaterial aufgebracht. Ein Tröpfchen wird nur dann erzeugt und ausgestossen, wenn ein Bildpunkt dargestellt werden muss.

Die Erfindung bezieht sich auf Aufzeichnungsmaterialien und Beschichtungsmassen, die in beiden Verfahren verwendet werden können.
An Aufzeichnungsmaterialien für den Tintenstrahldruck werden hohe Ansprüche gestellt. Das erzeugte Bild muss die folgenden Eigenschaften aufweisen:
- Hohe Auflösung
- Hohe Farbdichte
- Gute Farbwiedergabe
- Gute Wischfestigkeit
- Gute Wasserfestigkeit
- Hohe Lichtechtheit

Um dies zu erreichen, müssen die folgenden Bedingungen erfüllt werden:
1. Die Tinte muss vom Aufzeichnungsmaterial rasch absorbiert werden.
2. Die aufgespritzten Tintentröpfchen müssen auf dem Aufzeichnungsmaterial kreisförmig und genau begrenzt auseinanderlaufen.
3. Die Farbstoffdiffusion im Aufzeichnungsmaterial muss gering sein, damit der Durchmesser der Farbpunkte nicht mehr als nötig vergrössert wird.
4. Ein Tintenpunkt darf beim Überlappen mit einem vorher aufgebrachten Tintenpunkt diesen nicht beeinträchtigen oder verwischen.
5. Das Aufzeichnungsmaterial muss eine Oberfläche aufweisen, die eine hohe Dichte und Brillanz der Farben ermöglicht.
6. Das Aufzeichnungsmaterial muss vor und nach dem Bedrucken hervorragende physikalische Eigenschaften aufweisen.
7. Das bedruckte Aufzeichnungsmaterial darf sich unter dem Einfluss von Licht nicht verändern.

Eine besonders rasche Tintenaufnahme und eine sehr gute Farbstoffixierung zeigen Aufzeichnungsmaterialen, die in mindestens einer Schicht ein poröses anorganisches Oxid enthalten. Besonders bevorzugt als poröses anorganisches Oxid wird Pseudo-Böhmit, ein Agglomerat von Aluminiumoxid/hydroxid der Formel Al₂O₃ • n H₂O (n= 1 bis 1.5). Aufzeichnungsmaterialien dieser Art werden z. B. in den Patentanmeldungen EP 0'298'424, EP 0'407'720 und EP 0'500'021 beschrieben. Solche Materialien zeigen aber den grossen Nachteil, dass die im Tintenstrahldruck verwendeten Farbstoffe eine schlechte Lichtechtheit aufweisen.

In der Patentanmeldung EP 0'614'771 wird zur Verhinderung der Vergilbung eines Aufzeichnungsmaterials, das solche porösen Oxide enthält, der Zusatz von organischen Säuren mit einer ersten Dissoziationskonstante von höchstens 5 vorgeschlagen, die einen aromatischen Ring oder mindestens zwei Carboxylgruppen enthalten. Besonders bevorzugt sind hier Säuren, deren erster Dissoziationskoeffizient zwischen 2 und 5 liegt.
Im Patent US 4'775'594 wird der Zusatz nichtflüchtiger organischer Säuren zu transparenten Aufzeichnungsmaterialien für den Tintenstrahldruck beschrieben, um die Benetzbarkeit eines solchen Materials durch die Tinten zu verbessern.
In der Patentanmeldung EP 0'410'051 wird beschrieben, dass zur Verbesserung der Bedruckbarkeit (Haftung der Druckfarben) von Papieren eine Oberflächenschicht Zimtsäure oder Zimtsäurederivate enthält.
In der Patentanmeldung EP 0'685'345 wird zur Verbesserung der Lichtechtheit eines Aufzeichnungsmaterials, das poröse anorganische Oxide enthält, der Zusatz von Dithiocarbamaten, Thiuramen, Thiocyanaten oder sterisch gehinderten Aminen vorgeschlagen.

Alle diese vorgeschlagenen Massnahmen führen aber höchstens zu einer sehr kleinen Verbesserung der Lichtbeständigkeit von im Tintenstrahldruck hergestellten Bildern auf Aufzeichnungsmaterialien, die poröse anorganische Oxide enthalten.

### Zusammenfassung der Erfindung

Ein Ziel der Erfindung ist die Bereitstellung von Aufzeichnungsmaterialien für den Tintenstrahldruck, die neben einem hohen Tintenaufnahmevermögen verbunden mit einer raschen Tintenaufnahme eine sehr gute Bildqualität, eine ausgezeichnete Wasserfestigkeit und eine hervorragende Lichtbeständigkeit aufweisen.
Ein weiteres Ziel der Erfindung ist die Bereitstellung solcher Aufzeichnungsmaterialien, die mit allen heute auf dem Markt erhältlichen Tintenstrahldruckem eine hervorragende Bildqualität ergeben.

Gelöst wird diese Aufgabe durch ein Aufzeichnungsmaterial für den Tintenstrahldruck, das auf einem Träger mindestens eine Tintenaufnahmeschicht bestehend aus Bindemitteln und einem porösen anorganischen Oxid enthält, dadurch gekennzeichnet, dass das Aufzeichnungsmaterial eine wasserlösliche aliphatische Monohydroxymonocarbonsäure mit mehr als 2 Kohlenstoffatomen enthält. Das poröse anorganische Oxid und die wasserlösliche aliphatische Monohydroxymonocarbonsäure mit mehr als 2 Kohlenstoffatomen können in der gleichen oder in verschiedenen Schichten enthalten sein.
Als poröses anorganisches Oxid können kolloidales Siliziumoxid, kolloidales Aluminiumoxid oder kolloidales Aluminiumoxid/hydroxid verwendet werden. Bevorzugt sind kolloidales Aluminiumoxid oder kolloidales Aluminiumoxid/hydroxid. Besonders bevorzugt als kolloidales Aluminiumoxid ist γ-Al₂O₃ und als kolloidales AIOOH ein mit Salzen der seltenen Erden umgesetztes kolloidales AIOOH, wie es in der Patentanmeldung EP 0 875 394 A (stand der Technik nach Artikel 54(3) EPÜ beschrieben worden ist. Besonders bevorzugt als kolloidales Aluminiumoxid/hydroxid ist Pseudo-Böhmit, ein Agglomerat von Aluminiumoxid/hydroxid der Formel Al₂O₃ • n H₂O (n= 1 bis 1.5), oder mit Salzen der seltenen Erden umgesetzter Pseudo-Böhmit, wie ebenfalls in der Patentanmeldung EP 0 875 394 A (stand der Technik nach Artikel 54(3) EPÜ beschrieben worden ist.
Die wasserlösliche aliphatische Monohydroxymonocarbonsäure mit mehr als 2 Kohlenstoffatomen kann auf verschiedene Arten in das Aufzeichnungsmaterial eingearbeitet werden.
Eine Möglichkeit ist der direkte Zusatz zu den Giesslösungen, die anschliessend auf einen Träger aufgebracht werden.
Als andere Möglichkeit kann das poröse anorganische Oxid vor seiner Zugabe zur Giesslösung in einem getrennten Schritt in wässriger Lösung mit der wasserlöslichen aliphatischen Monohydroxymonocarbonsäure mit mehr als 2 Kohlenstoffatomen z. B. durch Erhitzen unter Rückfluss umgesetzt wird.
Besonders bevorzugt ist das Verfahren, bei dem Aluminiumalkoxide in Gegenwart der wasserlöslichen aliphatischen Monohydroxymonocarbonsäure mit mehr als 2 Kohlenstoffatomen nach einem ähnlichen Verfahren zu Pseudo-Böhmit hydrolisiert werden, wie es im Patent US 5'354'634 beschrieben ist.
Besonders bevorzugt als wasserlösliche aliphatische Monohydroxymonocarbonsäure mit mehr als 2 Kohlenstoffatomen ist 2-Hydroxypropionsäure.
Die Erfindung wird in der folgenden ausführlichen Beschreibung näher erläutert.

### Ausführliche Beschreibung der Erfindung

Die Erfindung beschreibt ein Aufzeichnungsmaterial für den Tintenstrahldruck, das auf einem Träger eine oder mehrere Schichten aufweist, die neben einem porösen anorganischen Oxid und Bindemitteln in einer Tintenaufnahmeschicht eine wasserlösliche aliphatische Monohydroxymonocarbonsäure mit mehr als 2 Kohlenstoffatomen enthalten. Das poröse anorganische Oxid und die aliphatische Monohydroxymonocarbonsäure mit mehr als 2 Kohlenstoffatomen können in der gleichen oder in verschiedenen Schichten enthalten sein.

Als poröses anorganisches Oxid können kolloidales Siliziumoxid, kolloidales, Aluminiumoxid oder kolloidales Aluminiumoxid/hydroxid verwendet werden. Bevorzugt sind kolloidales Aluminiumoxid oder kolloidales Aluminiumoxid/hydroxid. Besonders bevorzugt als kolloidales Aluminiumoxid ist γ-Al₂O₃ und als kolloidales AIOOH mit Salzen der seltenen Erden umgesetztes AlOOH, wie es in der europäischen Patentanmeldung EP 0 875 394 A beschrieben worden ist. Dieses poröse Aluminiumoxid/hydroxid enthält ein oder mehrere Elemente der Ordnungszahl 57 bis 71 des Periodischen Systems der Elemente, bevorzugt in einer Menge zwischen 0.4 und 2.5 Molprozent bezogen auf Al₂O₃. Besonders bevorzugt als Aluminiumoxid/hydroxid ist Pseudo-Böhmit, ein Agglomerat von Aluminiumoxid/hydroxid der Formel Al₂O₃ • n H₂O (n= 1 bis 1.5), oder mit Salzen der seltenen Erden umgesetzter Pseudo-Böhmit, wie ebenfalls in der Patentanmeldung EP 0 875 394 A beschrieben worden ist. Dieser poröse Pseudo-Böhmit enthält ein oder mehrere Elemente der Ordnungszahl 57 bis 71 des Periodischen Systems der Elemente, bevorzugt in einer Menge zwischen 0.4 und 2.5 Molprozent bezogen auf Al₂O₃.
Die wasserlösliche aliphatische Monohydroxymonocarbonsäure mit mehr als 2 Kohlenstoffatomen kann auf verschiedene Arten in das Aufzeichnungsmaterial eingearbeitet werden.
Eine Möglichkeit ist der direkte Zusatz zu den Giesslösungen, die anschliessend auf einen Träger aufgebracht werden. Dabei wird der pH-Wert der Giesslösungen durch Zusatz der wasserlöslichen aliphatischen Monohydroxymonocarbonsäure mit mehr als 2 Kohlenstoffatomen auf einen Wert zwischen 2.5 und 5.5, bevorzugt auf einen Wert zwischen 3.0 und 5.0 eingestellt.
Eine weitere Möglichkeit ist, dass das poröse anorganische Oxid vor seiner Zugabe zur Giesslösung in einem getrennten Schritt mit der wasserlöslichen aliphatischen Monohydroxymonocarbonsäure mit mehr als 2 Kohlenstoffatomen durch Kochen unter Rückfluss in wässriger Lösung umgesetzt wird. Dabei wird der pH-Wert der wässrigen Lösung durch Zusatz der wasserlöslichen aliphatischen Monohydroxymonocarbonsäure mit mehr als 2 Kohlenstoffatomen auf einen Wert zwischen 2.5 und 4.0, bevorzugt auf einen Wert zwischen 2.5 und 3.5 eingestellt.
Besonders bevorzugt ist das Verfahren, bei dem Aluminiumalkoxide in Gegenwart der wasserlöslichen aliphatischen Monohydroxymonocarbonsäure mit mehr als 2 Kohlenstoffatomen nach einem ähnlichen Verfahren hydrolisiert werden, wie es im Patent US 5'354'634 beschrieben ist. Diese Hydrolyse erfolgt am besten in einem pH-Bereich zwischen 2.5 und 6.0; bevorzugt in einem pH-Bereich zwischen 3.0 und 5.0. Der pH-Wert wird dabei mit der wasserlöslichen aliphatischen Monohydroxymonocarbonsäure auf den gewünschten Wert eingestellt.

Besonders bevorzugt als wasserlösliche aliphatische Monohydroxymonocarbonsäure mit mehr als 2 Kohlenstoffatomen ist 2-Hydroxypropionsäure.
Die erfindungsgemässen Aufzeichnungsmaterialien für den Tintenstrahldruck enthalten in den aufgetragenen Schichten neben dem porösen anorganischen Oxid und der wasserlöslichen aliphatischen Monohydroxymonocarbonsäure eines oder mehrere Bindemittel.
Die Bindemittel sind im allgemeinen wasserlösliche Polymere. Besonders bevorzugt sind filmbildende Polymere.
Die wasserlöslichen Polymere umfassen z. B. natürliche oder daraus hergestellte modifizierte Verbindungen wie Albumin, Gelatine, Kasein, Stärke, Gummi arabicum, Natrium- oder Kaliumalginat, Hydroxyethylcellulose, Carboxymethylcellulose, α-, β- oder γ-Cyclodextrin usw. Wenn eines der wasserlöslichen Polymere Gelatine ist, so können alle bekannten Gelatinetypen verwendet werden, wie saure Schweinehautgelatine oder alkalische Knochengelatine, sauer oder basisch hydrolisierte Gelatinen, wie auch substituierte Gelatinen, z. B phthalierte, acetylierte oder carbamoylierte Gelatine, oder mit Trimellithsäureanhydrid umgesetzte Gelatine.
Ein bevorzugtes natürliches Bindemittel ist Gelatine.
Synthetische Bindemittel können ebenfalls verwendet werden und umfassen z. B. Polyvinylalkohol, Polyvinylpyrrolidon, vollständig oder teilweise verseifte Verbindungen von Copolymeren aus Vinylacetat und anderen Monomeren; Homopolymere oder Copolymere von ungesättigten Carbonsäuren wie (Meth)acrylsäure, Maleinsäure, Crotonsäure usw.; Homopolymere oder Copolymere aus sulfonierten Vinylmonomeren wie z. B. Vinylsulfonsäure, Styrolsulfonsäure usw. Ebenfalls können Homopolymere oder Copolymere aus Vinylmonomeren von (Meth)acrylamid; Homopolymere oder Copolymere anderer Monomerer mit Ethylenoxid; Polyurethane; Polyacrylamide; wasserlösliche Nylonpolymere; Polyester; Polyvinyllactame; Acrylamidpolymere; substituierter Polyvinylalkohol; Polyvinylacetale; Polymere aus Alkyl- und Sulfoalkylacrylaten und -methacrylaten; hydrolisierte Polyvinylacetate; Polyamide; Polyvinylpyridine; Polyacrylsäure; Copolymere mit Maleinsäureanhydrid; polyalkylenoxide; Copolymere mit Methacrylamid und Copolymere mit Maleinsäure eingesetzt werden. Alle diese Polymere können auch als Mischungen verwendet werden.
Bevorzugte synthetische Bindemittel sind Polyvinylalkohol und Polyvinylpyrrolidon oder ihre Mischungen.
Diese Polymere können mit wasserunlöslichen natürlichen oder synthetischen hochmolekularen Verbindungen gemischt werden, insbesondere mit Acryllatices oder Styrolacryllatices.
Obwohl wasserunlösliche Bindemittel nicht explizit beansprucht werden, so sollen wasserunlösliche Polymere trotzdem als Systembestandteil angesehen werden.

Die oben erwähnten Polymere mit vernetzbaren Gruppen können mit Hilfe eines Vernetzers oder Härters zu praktisch wasserunlöslichen Schichten umgesetzt werden. Solche Vernetzungen können kovalent oder ionisch sein. Die Vernetzung oder Härtung der Schichten erlaubt eine Veränderung der physikalischen Schichteigenschaften, wie z. B. der Flüssigkeitsaufnahme, oder der Widerstandsfähigkeit gegen Schichtverletzungen.
Die Vemetzer und Härter werden auf Grund der zu vernetzenden wasserlöslichen Polymere ausgesucht.
Organische Vemetzer und Härter umfassen z. B. Aldehyde (wie Formaldehyd, Glyoxal oder Glutaraldehyd); N-Methylolverbindungen (wie Dimethylolharnstoff oder Methylol-Dimethylhydantoin); Dioxane (wie 2,3-Dihydroxydioxan); reaktive Vinylverbindungen (wie 1,3,5-Trisacryloyl-Hexahydro-s-Triazin oder Bis-(Vinylsulfonyl)methylether), reaktive Halogenverbindungen (wie 2,4-Dichloro-6-Hydroxy-s-Triazin); Epoxide; Aziridine; Carbamoylpyridinverbindungen oder Mischungen zweier oder mehrere dieser erwähnten Vernetzer.
Anorganische Vemetzer und Härter umfassen z. B. Chromalaun, Aluminiumalaun oder Borsäure.
Die Schichten können auch reaktive Substanzen enthalten, die unter Einwirkung von UV-Licht, Elektronenstrahlen, Röntgenstrahlen oder Wärme die Schichten vernetzen.
Die Schichten können weiter durch den Zusatz von Füllstoffen modifiziert werden. Mögliche Füllstoffe sind z. B. Kaolin, Ca- oder Ba-Carbonate, Siliziumdioxid, Titandioxid, Bentonite, Zeolite, Aluminiumsilikat, Calciumsilikat oder kolloidales Siliciumdioxid. Auch inerte organische Partikeln wie z. B. Kunststoffkügelchen können verwendet werden. Diese Kügelchen können aus Polyacrylaten, Polyacrylamiden, Polystyrol oder verschiedenen Copolymeren aus Acrylaten und Styrol bestehen. Die Füllstoffe werden auf Grund des beabsichtigten Gebrauchs der hergestellten Bilder ausgewählt. Einige dieser Füllstoffe können in transparenten Materialien nicht verwendet werden. Sie können aber positive Wirkungen in Aufsichtsmaterialien besitzen. Sehr oft erreicht man mit dem Einsatz solcher Füllstoffe eine gewünschte matte Oberfläche.
Die Aufzeichnungsmaterialien können weiter lösliche Metallsalze enthalten, z. B. Erdalkalisalze oder Salze der seltenen Erden.
In den erfindungsgemässen Aufzeichnungsmaterialien ist mindestens eine Tintenaufnahmeschicht auf einen Träger aufgebracht. Eine grosse Vielfalt an Trägern ist bekannt und wird auch eingesetzt. So können alle Träger, die bei der Herstellung von photographischen Materialien verwendet werden, eingesetzt werden. Verwendet werden z. B. transparente Träger aus Celluloseestem wie Cellulosetriacetat, Celluloseacetat, Cellulosepropionat, oder Celluloseacetat/butyrat, Polyester wie Polyethylenterephthalat, Polyamide, Polycarbonate, Polyimide, Polyolefine, Polyvinylacetale, Polyether, Polyvinylchlorid und Polyvinylsulfone. Bevorzugt werden Polyester, insbesondere Polyethylenterephthalat wegen ihrer ausgezeichneten Dimensionsstabilität. Bei den in der photographischen Industrie eingesetzten opaken Trägern können z. B. Barytpapier, mit Polyolefinen beschichtete Papiere, weissopake Polyester wie z. B. Melinex® der Firma ICI eingesetzt werden. Besonders bevorzugt sind polyolfinbeschichtete Papiere oder weissopaker Polyester.
Es ist vorteilhaft, diese Träger, insbesondere Polyester, vor dem Beguss mit einer Substrierschicht zu versehen, um die Haftung der Tintenaufnahmeschichten auf dem Träger zu verbessern. Solche Substrierschichten sind in der photographischen Industrie wohlbekannt und enthalten z. B. Terpolymere aus Vinylidenchlorid, Acrylnitril und Acrylsäure oder aus Vinylidenchlorid, Methylacrylat und Itaconsäure.
Ebenfalls als Träger können unbeschichtete Papiere verschiedener Typen verwendet werden, die in ihrer Zusammensetzung und in ihren Eigenschaften grosse Unterschiede aufweisen können. Pigmentierte Papiere und "cast coated" Papiere können ebenfalls verwendet werden, wie auch Metallfolien z. B. aus Aluminium.
Die erfindungsgemässen Tintenaufnahmeschichten werden im allgemeinen aus wässrigen Lösungen oder Dispersionen, die alle nötigen Komponenten enthalten, gegossen. In vielen Fällen werden Netzmittel als Begusshilfsmittel zugesetzt, um das Giessverhalten und die Schichtgleichmässigkeit zu verbessern. Solche oberflächenaktiven Verbindungen sind in vielen Patenten beschrieben, z. B. in den US-Patenten 2'240'472, 2'271'623, 2'288'226, 2'739'891, 2'823'123, 2'831'766, 2'944'900, 3'068'101, 3'133'816, 3'158'484, 3'210'191, 3'253'919, 3'294'540, 3'415'649, 3'441'413, 3'475'174, 3'507'660, 3'545'974, 3'589'906, 3'666'478, 3'671'247, 3'726'683, 3'754'924, 3'756'828, 3'772'021 und 3'843'368; den GB-Patenten 1'012'495, 1'022'878, 1'138'514, 1'159'825, 1'179'290, 1'198'450, 1'374'780 und 1'397'218, und im Patent BE 731'126.
Neben ihrer Wirkung während des Giessvorgangs können diese Verbindungen auch einen Einfluss auf die Bildqualität haben und können deshalb dementsprechend ausgewählt werden. Obwohl solche oberflächenaktiven Verbindungen in der Erfindung nicht beansprucht werden, bilden sie trotzdem einen wesentlichen Bestandteil der Erfindung.
Zusätzlich zu den schon erwähnten Bestandteilen können die erfindungsgemässen Aufzeichnungsmaterialien zusätzliche Verbindungen enthalten, um seine Eigenschaften weiter zu verbessern, so z. B. optische Aufheller zur Verbesserung des Weissgrades, wie z. B. Stilbene, Cumarine, Triazine, Oxazole oder weitere dem Fachmann bekannte Verbindungen.

Zur Verbesserung der Lichtechtheit können UV-Absorber, wie z. B. Benztriazole, Benzophenone, Thiazolidone, Oxazole, Thiazole oder weitere dem Fachmann bekannte Verbindungen verwendet werden. Die Menge des UV-Absorbers beträgt 200 - 2000 mg/m², vorzugsweise 400 - 1000 mg/m². Der UV-Absorber kann in jede Schicht des erfindungsgemässen Aufzeichnungsmaterials eingebracht werden, besonders vorteilhaft ist aber, wenn er in die oberste Schicht eingebracht wird.
Es ist weiter bekannt, dass die im Tintenstrahldruck hergestellten Bilder durch den Zusatz von Stabilisatoren und Antioxidantien geschützt werden können. Beispiele solcher Verbindungen sind sterisch gehinderte Phenole, sterisch gehinderte Amine, Chromanole usw. Die erwähnten Verbindungen können als wässrige Lösungen zu den Giesslösungen zugesetzt werden. Falls die Verbindungen nicht genügend wasserlöslich sind, können sie durch andere, bekannte Verfahren in die Giesslösungen eingebracht werden. So können die Verbindungen z. B. in einem mit Wasser mischbaren organischen Lösungsmittel wie z. B. niedere Alkohole, Glykole, Ketone, Ester, Amide gelöst werden. Es ist auch möglich, die Verbindungen als feinkörnige Dispersionen, als Ölemulsionen, als Cyclodextran-Einschlussverbindungen oder als Latex, der die Verbindung enthält, in die Giesslösung einzubringen.
Normalerweise haben die erfindungsgemässen Schichten eine Trockenschichtdicke von 0.5 bis 100 µm, insbesondere 5 bis 50 µm.
Die Giesslösungen können auf verschiedene Arten auf den Träger aufgebracht werden. Die Giessverfahren schliessen z. B. den Extrusionsguss, den Luftmesserguss, den Schlitzguss, den Kaskadenguss und den Vorhangguss ein. Die Giesslösungen können auch mit einem Sprühverfahren aufgebracht werden. Die Tintenaufnahmeschichten können aus mehreren Einzelschichten bestehen, die einzeln nacheinander oder gemeinsam aufgebracht werden können. Ein Träger kann auch beidseitig mit Tintenaufnahmeschichten begossen werden. Es ist auch möglich, auf der Rückseite eine antistatische Schicht oder eine Schicht zur Verbesserung der Planlage aufzubringen. Das gewählte Giessverfahren schränkt die Erfindung aber in keiner Art und Weise ein.

Tinten für den Tintenstrahldruck bestehen im wesentlichen aus einer flüssigen Trägersubstanz und einem darin gelösten oder dispergierten Farbstoff oder Pigment. Die flüssige Trägersubstanz für Tintenstrahldrucktinten ist im allgemeinen Wasser oder eine Mischung aus Wasser und einem mit Wasser mischbaren Lösungsmittel wie Ethylenglykol, Glykole mit höherem Molekulargewicht, Glycerin, Dipropylenglykol, Polyethylenglykol, Amide, Polyvinylpyrrolidon, N-Methylyrrolidon, Cyclohexylpyrrolidon, Carbonsäuren und deren Ester, Ether, Alkohole, organische Sulfoxide, Sulfolan, Dimethylformamid, Dimethylsulfoxid, Cellosolve, Polyurethane, Acrylate usw.
Die nichtwässrigen Tintenbestandteile dienen allgemein als Feuchthalter, Hilfslösungsmittel, Viskositätsregler, Eindringhilfsmittel oder Trocknungsbeschleuniger. Die organischen Verbindungen besitzen meistens einen Siedepunkt, der über dem von Wasser liegt. Tinten für den kontinuierlichen Tintenstrahldruck können weiter anorganische oder organische Salze zur Erhöhung der Leitfähigkeit enthalten. Beispiele solcher Salze sind Nitrate, Chloride, Phosphate, und die wasserlöslichen Salze wasserlöslicher organischer Säuren wie Acetate, Oxalate und Citrate. Die Farbstoffe oder Pigmente, die zur Herstellung der zusammen mit den erfindungsgemässen Aufzeichnungsmaterialien verwendbaren Tinten eingesetzt werden können, beinhalten praktisch alle bekannten Klassen dieser farbigen Verbindungen. Typische Beispiele verwendeter Farbstoffe oder Pigment sind in der Patentanmeldung EP 0'559'324 aufgeführt. Die erfindungsgemässen Aufzeichnungsmaterialien können mit fast allen dem Stand der Technik entsprechenden Tinten verwendet werden.
Zusätzlich können die Tinten weitere Zusätze enthalten wie oberflächenaktive Substanzen, optische Aufheller, UV-Absorber, Lichtstabilisatoren, Konservierungsmittel und polymere Verbindungen.
Die Beschreibung der Tinten dient nur als Illustration und ist in Bezug auf die Erfindung in keiner Weise einschränkend.

Güsse der erfindungsgemässen Aufzeichnungsmaterialien wurden folgendermassen hergestellt:
Je 100 g/m² der Giesslösungen, deren Herstellung später beschrieben wird, wurden bei 40° C auf einen transparenten Polyesterträger gegossen und anschliessend wurde der begossene Träger 60 Minuten bei 30° C getrocknet. Alle Güsse enthalten 10 g/m² kolloidales Aluminiumoxid oder kolloidales Aluminiumoxid/hydroxid (berechnet als Al₂O₃).

Das folgende Verfahren wurde zur Bestimmung der Lichtbeständigkeit der hier beschriebenen Aufzeichnungsmaterialien verwendet.
Auf die erfindungsgemässen Aufzeichnungsmaterialien, wie sie in den folgenden Beispielen beschrieben werden, wurden mit einem Tintenstrahldrucker EPSON STYLUS™ COLOR 500 im Transparent-Modus mit Originaltinten Farbfelder in den 4 Farben Blaugrün, Purpur, Gelb und Schwarz gedruckt.
Die bedruckten Muster wurden in einem Atlas Ci35A Weather-O-Meter® mit einer 6500 W Xenon-Lampe so lange bestrahlt, bis 40 kJoule/cm² erreicht waren. Der Dichteverlust wurde mit einem X-Rite®- Densitometer gemessen. Er wird als prozentualer Dichteverlust ausgehend von der ursprünglichen Dichte angegeben. Beim Einfarbenschwarz werden die Dichteverluste in den 3 Farbkanälen Gelb, Purpur und Blaugrün in dieser Reihenfolge angegeben.

### Beispiele

### Beispiel 1

### a) Hydrolyse von Aluminiumisopropoxid

In einem Reaktionsgefäss aus Glas wurden 360 g deionisiertes Wasser und 338 g Isopropanol vorgelegt. Bei einer Temperatur von 75° C wurden 153 g Aluminiumisopropoxid (erhältlich bei Fluka Chemie AG, Buchs, Schweiz) zugegeben und das Gemisch bei einer Temperatur zwischen 75° C und 78° C während 4 Stunden gerührt. Nach der Erhöhung der Temperatur auf 95° C wurden 1.5 g 2-Hydroxypropionsäure zugegeben. Anschliessend wurde auf eine Temperatur zwischen 75° C und 78° C abgekühlt und das Gemisch 48 Stunden unter Rühren bei dieser Temperatur gehalten. Zum Schluss wurde die erhaltene kolloidale Lösung im Vakuum eingedampft. Es wurden 43 g eines weissen Pulvers mit einem Gehalt von 75.2 % Al₂O₃ erhalten. Das Röntgendiffraktionsspektrum entsprach Pseudo-Böhmit der Formel AIOOH.

### b) Herstellung der Giesslösung

13.3 g des getrockneten Festkörpers aus Beispiel 1a) wurden unter Rühren bei einer Temperatur von 40° C zu einem Gemisch aus 50 g deionisiertem Wasser und 7.0 g Essigsäure (17.65 %) zugegeben. Anschliessend wurden 16 g einer Lösung von Polyvinylalkohol (7.5 Gewichtsprozent, Hydrolysegrad 98 - 99 %, MG 85'000 bis 146'000) (36,315-4, erhältlich bei ALDRICH Chemie, Buchs, Schweiz) zugegeben, die Lösung 3 Minuten mit Ultraschall behandelt, der pH-Wert mit Essigsäure auf einen Wert von 3.3 und das Gesamtgewicht mit deionisiertem Wasser auf 100 g eingestellt.

### Vergleichsbeispiel A

### a) Hydrolyse von Aluminiumisopropoxid

An Stelle der 1.5 g 2-Hydroxypropionsäure von Beispiel 1 wurde zur Hydrolyse 1 g Salpetersäure (30 %) verwendet. Es entstanden 44.6 g eines weissen Pulvers mit einem Gehalt von 77.2 % Al₂O₃. Das Röntgendiffraktionsspektrum entsprach Pseudo-Böhmit der Formel AIOOH.

### b) Herstellung der Giesslösung

An Stelle der 13.3 g des getrockneten Festkörpers und 7.0 g Essigsäure (17.65 %) aus Beispiel 1a) wurden 12.953 g des getrockneten Festkörpers aus Beispiel Aa) und 6.8 g Essigsäure (17.65 %) verwendet. Der pH-Wert der Lösung betrug 3.3.

### Vergleichsbeispiele B - K

### a) Hydrolyse von Aluminiumisopropoxid

Die Hydrolyse erfolgte wie in Vergleichsbeispiel A.

### b) Herstellung der Giesslösungen

An Stelle der Essigsäure aus Vergleichsbeispiel A wurden die in Tabelle 1 aufgeführten Säuren verwendet, wobei der pH-Wert mit der entsprechenden Säure auf 3.3 eingestellt wurde.

**Tabelle 1**

| Vergleichsbeispiel Nr. | Säure |
|---|---|
| B | Propionsäure |
| C | Malonsäure |
| D | Bernsteinsäure |
| E | Adipinsäure |
| F | Maleinsäure |
| G | Oxalsäure |
| H | L(+)-Weinsäure |
| I | Phthalsäure |
| J | Glykolsäure |
| K | Hydroxymalonsäure |

### Beispiel 2

### a) Hydrolyse von Aluminiumisopropoxid

Die Hydrolyse erfolgte wie in Vergleichsbeispiel A.

### b) Herstellung der Giesslösung

An Stelle der 6.8 g Essigsäure (17.65 %) aus Beispiel Ab) wurden 2.9 g 2-Hydroxypropionsäure verwendet. Der pH-Wert der Giesslösung betrug 3.3.

### Beispiel 3

### a) Hydrolyse von Aluminiumisopropoxid

Die Hydrolyse erfolgte wie in Vergleichsbeispiel A.

### b) Herstellung der Giesslösung

Nach Zugabe der 2-Hydroxypropionsäure wie in Beispiel 2 wurde die erhaltene Lösung vor der Zugabe des Polyvinylalkohols 20 Stunden unter Rückfluss erhitzt.

### Beispiel 4

### Herstellung der Giesslösung

Bei Raumtemperatur wurden 18 g γ-Al₂O₃ (ALU C, erhältlich bei DEGUSSA AG, Baar, Schweiz) (Gehalt 96.6 % Al₂O₃) in 63 g deionisiertem Wasser unter Rühren dispergiert. Der pH-Wert wurde mit 2-Hydroxypropionsäure auf 3.3 eingestellt. Die Lösung wurde anschliessend 20 Stunden unter Rückfluss erhitzt. Anschliessend wurden 16 g einer Lösung von Polyvinylalkohol (7.5 Gewichtsprozent, Hydrolysegrad 98 - 99 %, MG 85'000 bis 146'000) (36,315-4, erhältlich bei ALDRICH Chemie, Buchs, Schweiz) zugegeben, die Lösung 2 Minuten mit Ultraschall behandelt, der pH-Wert mit 2-Hydroxypropionsäure erneut auf einen Wert von 3.3 und das Gesamtgewicht mit deionisiertem Wasser auf 100 g eingestellt.

### Vergleichsbeispiel L

### Herstellung der Giesslösung

An Stelle der 2-Hydroxypropionsäure von Beispiel 4 wurde Essigsäure verwendet.

### Beispiel 5

### Herstellung der Giesslösung

5 g des weissen Pulvers aus Beispiel 1a) wurden bei 20° C in 80 g deionisiertem Wasser dispergiert. Anschliessend wurden bei einer Temperatur von 90° C 0.212 g LaCl₃ (erhältlich bei Fluka Chemie AG, Buchs, Schweiz) zugegeben und es wurde 2 Stunden weitergerührt. Die Lösung wurde unter Vakuum eingedampft. Es wurde ein weisses Pulver erhalten, das 0.022 Molprozent La enthält.
13.83 g dieses Pulvers wurden unter Rühren bei einer Temperatur von 40° C zu einer Lösung von 57 g deionisiertem Wasser und 6.81g Essigsäure (17.65 %) zugegeben. Anschliessend wurden 16 g einer Lösung von Polyvinylalkohol (7.5 Gewichtsprozent, Hydrolysegrad 98 - 99 %, MG 85'000 bis 146'000) (36,315-4, erhältlich bei ALDRICH Chemie, Buchs, Schweiz) zugegeben, die Lösung 3 Minuten mit Ultraschall behandelt, der pH-Wert mit Essigsäure erneut auf einen Wert von 3.3 und das Gesamtgewicht mit deionisiertem Wasser auf 100 g eingestellt.

### Vergleichsbeispiel M

### Herstellung der Giesslösung

An Stelle von 5 g des weissen Pulvers aus Beispiel 1a) in Beispiel 5 wurden 5.1 g des weissen Pulvers aus Vergleichsversuch A verwendet.

Die Ergebnisse der Prüfung der Lichtbeständigkeit sind in Tabelle 2 zusammengestellt, wenn Pseudo-Böhmit als poröses anorganisches Oxid verwendet wurde.

**Tabelle 2**

| Beispiel Nr. | Prozentualer Dichteverlust | | | | | |
|---|---|---|---|---|---|---|
| | Gelb | Purpur | Blaugrün | Schwarz | | |
| 1 | 18 | 23 | 16 | 31 | 35 | 45 |
| 2 | 15 | 30 | 10 | 33 | 42 | 50 |
| 3 | 21 | 33 | 11 | 31 | 39 | 49 |
| A | 20 | 42 | 20 | 44 | 58 | 68 |
| B | 20 | 44 | 20 | 44 | 54 | 64 |
| C | 26 | 40 | 20 | 41 | 49 | 60 |
| D | 30 | 46 | 19 | 50 | 61 | 69 |
| E | 24 | 40 | 25 | 51 | 60 | 71 |
| F | 25 | 38 | 23 | 50 | 59 | 68 |
| G | 25 | 36 | 25 | 54 | 64 | 71 |
| H | 24 | 34 | 21 | 28 | 57 | 67 |
| I | 24 | 35 | 21 | 53 | 61 | 70 |
| J | 23 | 35 | 23 | 47 | 59 | 66 |
| K | 28 | 37 | 36 | 53 | 63 | 69 |

Ein Vergleich der Ergebnisse aus Tabelle 2 zeigt, dass bei der Verwendung von Pseudo-Böhmit als poröses anorganisches Oxid der erfindungsgemässe Zusatz von 2-Hydroxypropionsäure zu den Aufzeichnungsmaterialien (Beispiele 1 - 3) die Lichtbeständigkeit aller 4 Farbstoffe gegenüber Aufzeichnungsmaterialien, die Säuren des Standes der Technik (Beispiele A - K) enthalten, wesentlich verbessert wird. Diese Verbesserung tritt unabhängig davon auf, auf welche Art und Weise die 2-Hydroxypropionsäure zum Aufzeichnungsmaterial zugesetzt wird.

Die Ergebnisse der Prüfung der Lichtbeständigkeit sind in Tabelle 3 zusammengestellt, wenn γ-Al₂O₃ als poröses anorganisches Oxid verwendet wurde.

**Tabelle 3**

| Beispiel Nr. | Prozentualer Dichteverlust | | | | | |
|---|---|---|---|---|---|---|
| | Gelb | Purpur | Blaugrün | Schwarz | | |
| 4 | 22 | 27 | 5 | 29 | 31 | 39 |
| L | 47 | 71 | 8 | 26 | 32 | 36 |

Ein Vergleich der Ergebnisse aus Tabelle 3 zeigt, dass bei Verwendung von y-Al₂O₃ als poröses anorganisches Oxid der erfindungsgemässe Zusatz von 2-Hydroxypropionsäure zu den Aufzeichnungsmaterialien (Beispiel 4) die Lichtbeständigkeit der 3 Farbstoffe Gelb, Purpur und Blaugrün gegenüber einem Aufzeichnungsmaterial, das eine Säure des Standes der Technik (Beispiel L) enthält, sehr stark verbessert.

Die Ergebnisse der Prüfung der Lichtbeständigkeit sind in Tabelle 3 zusammengestellt, wenn mit Lanthannitrat umgesetzter Pseudo-Böhmit, wie es in der Patentanmeldung EP 0 875 394 A beschrieben worden ist, als poröses anorganisches Oxid verwendet wurde.

**Tabelle 4**

| Beispiel Nr. | Prozentualer Dichteverlust | | | | | |
|---|---|---|---|---|---|---|
| | Gelb | Purpur | Blaugrün | Schwarz | | |
| 5 | 22 | 39 | 7 | 17 | 14 | 21 |
| M | 27 | 81 | 31 | 25 | 16 | 29 |

Ein Vergleich der Ergebnisse aus Tabelle 4 zeigt, dass bei Verwendung von mit Lanthannitrat modifiziertem Pseudo-Böhmit als poröses anorganisches Oxid der erfindungsgemässe Zusatz von 2-Hydroxypropionsäure zum Aufzeichnungsmaterial (Beispiel 5) die Lichtbeständigkeit aller 4 Farbstoffe gegenüber einem Aufzeichnungsmaterial, das eine Säure des Standes der Technik (Beispiel M) enthält, stark verbessert.

Versuche, bei denen der pH-Wert der Giesslösung variiert wurde, ergaben im wesentlichen die gleichen Ergebnisse wie die oben erwähnten Beispiele und Vergleichsbeispiele.

## Patentansprüche

1. Aufzeichnungsmaterial für den Tintenstrahldruck, das auf einem Träger mindestens eine Tintenaufnahmeschicht bestehend aus Bindemitteln und einem porösen anorganischen Oxid enthält, dadurch gekennzeichnet, dass das Aufzeichnungsmaterial eine wasserlösliche aliphatische Monohydroxymonocarbonsäure mit mehr als 2 Kohlenstoffatomen enthält.

2. Aufzeichnungsmaterial gemäss Anspruch 1, dadurch gekennzeichnet, dass die wasserlösliche Monohydroxymonocarbonsäure 2-Hydroxypropionsäure ist.

3. Aufzeichnungsmaterial gemäss den Ansprüchen 1 oder 2, dadurch gekennzeichnet, dass das poröse anorganische Oxid kolloidales Aluminiumoxid oder kolloidales Aluminiumoxid/hydroxid ist.

4. Aufzeichnungsmaterial gemäss den Ansprüchen 1 oder 2, dadurch gekennzeichnet, dass das poröse anorganische Oxid kolloidales γ-Al₂O₃ ist.

5. Aufzeichnungsmaterial gemäss den Ansprüchen 1 oder 2, dadurch gekennzeichnet, dass das poröse anorganische Oxid Pseudo-Böhmit ist.

6. Aufzeichnungsmaterial gemäss den Ansprüchen 1 oder 2, dadurch gekennzeichnet, dass das poröse anorganische Oxid mit Salzen der seltenen Erden umgesetztes AIOOH oder Pseudo-Böhmit ist, das ein oder mehrere Elemente der Ordnungszahl 57 bis 71 des Periodischen Systems der Elemente, bevorzugt in einer Menge zwischen 0.4 und 2.5 Molprozent bezogen auf Al₂O₃ enthält.

7. Aufzeichnungsmaterial gemäss den Ansprüchen 5 und 6, dadurch gekennzeichnet, dass der Pseudo-Böhmit durch Hydrolyse von Aluminiumpropoxid in Gegenwart der wasserlöslichen aliphatischen Monohydroxymonocarbonsäure hergestellt wird.

8. Aufzeichnungsmaterial gemäss den Ansprüchen 1 bis 7, dadurch gekennzeichnet, dass als Bindemittel Gelatine, Polyvinylalkohol und Polyvinylpyrrolidon oder deren Mischungen verwendet werden.

## Claims

1. A recording sheet for ink jet printing comprising a support, having coated onto said support at least one ink receiving layer containing binders and a porous inorganic oxide, characterised in that the recording sheet contains a water-soluble aliphatic monohydroxymonocarboxylic acid with more than 2 C atoms.

2. A recording sheet according to claim 1 characterised in that the water-soluble monohydroxymonocarboxylic acid is 2-hydroxypropionic acid.

3. A recording sheet according to claims 1 or 2 characterised in that the porous inorganic oxide is colloidal aluminium oxide or colloidal aluminium oxide/hydroxide.

4. A recording sheet according to claims 1 or 2 characterised in that the porous inorganic oxide is colloidal γ-Al₂O₃.

5. A recording sheet according to claims 1 or 2 characterised in that the porous inorganic oxide is pseudo-bohemite.

6. A recording sheet according to claims 1 or 2 characterised in that the porous inorganic oxide is AIOOH or pseudo-bohemite comprising one or more of the elements of the rare earth metal series of the periodic system of the elements with atomic numbers 57 to 71, preferably in an amount of from 0.4 to 2.5 mole percent relative to Al₂O₃.

7. A recording sheet according to claims 5 or 6 characterised in that the pseudo-bohemite is prepared by hydrolysis of aluminium isopropoxide in the presence of the water-soluble aliphatic monohydroxymonocarboxylic acid.

8. A recording sheet according to claims 1 to 7 characterised in that the binders are gelatine, polyvinyl alcohol or polyvinyl pyrrolidone or mixtures thereof.

## Revendications

1. Feuille d'enregistrement destinée à l'impression par jet d'encre comprenant, sur un support, au moins une couche réceptrice d'encre composée de liants et d'un oxyde inorganique poreux, caractérisée en ce que la dite feuille d'enregistrement contient un acide aliphatique monohydroxymonocarboxylique soluble dans l'eau ayant plus de deux atomes de carbone.

2. Feuille d'enregistrement selon la revendication 1, caractérisée en ce que l'acide monohydroxymonocarboxylique soluble dans l'eau est l'acide 2-hydroxypropionique.

3. Feuille d'enregistrement selon les revendications 1 ou 2, caractérisée en ce que l'oxyde inorganique poreux est de l'oxyde d'aluminium colloïdal ou de l'oxyde/hydroxyde d'aluminium colloïdal.

4. Feuille d'enregistrement selon les revendications 1 ou 2, caractérisée en ce que l'oxyde inorganique poreux est le γ-Al₂O₃ colloïdal.

5. Feuille d'enregistrement selon les revendications 1 ou 2, caractérisée en ce que l'oxyde inorganique poreux est la pseudo-bohémite.

6. Feuille d'enregistrement selon les revendications 1 ou 2, caractérisée en ce que l'oxyde inorganique poreux est du AIOOH ou de la pseudo-bohémite, qui contient un ou plusieurs éléments de la série des métaux des terres rares ayant les numéros atomiques 57 à 71 de la classification périodique des éléments, de préférence dans une quantité de 0.4 à 2.5 pour-cent molaires par rapport à l'Al₂O₃.

7. Feuille d'enregistrement selon les revendications 5 ou 6, caractérisée en ce que la pseudo-bohémite est préparée par hydrolyse du propoxyde d'aluminium en présence des acides aliphatiques monohydroxymonocarboxyliques solubles dans l'eau.

8. Feuille d'enregistrement selon les revendications 1 à 7, caractérisée en ce que les liants sont de la gélatine, de l'alcool polyvinylique et du polyvinyle pyrrolidone ou des mélanges de ces composés.
